# EUROPEAN PATENT SPECIFICATION

(11) **EP 4 384 563 B1**
(45) Date of publication and mention of the grant of the patent: **26.11.2025**
(21) Application number: 22764408.5
(22) Date of filing: 10.08.2022
(51) Int. Cl.: C08G 18/16, C08G 18/18, C08G 18/20, C08G 18/24, C08G 18/32, C08G 18/40, C08G 18/48, C08G 18/63, C08G 18/66, C08G 18/76, C08K 5/5419, C08L 75/08

(54) **PROCESS FOR PREPARING A HIGH-RESILIENCE POLYURETHANE FOAM**
VERFAHREN ZUR HERSTELLUNG EINES HOCHELASTISCHEN POLYURETHANSCHAUMS
PROCÉDÉ DE PRÉPARATION D'UNE MOUSSE DE POLYURÉTHANE À HAUTE RÉSILIENCE

(30) Priority: 11.08.2021 EP 21190710
(43) Date of publication of application: 19.06.2024
(73) Proprietor: Shell Internationale Research Maatschappij B.V., 2596 HR The Hague (NL)
(72) Inventor: BHATTACHARYA, Ishita, Bangalore North 562149 (IN); PRADHAN, Pranaya Man Singh, Singapore 138588 (SG); GOPALAN NAIR, Pradeep Kumar, Bangalore North 562149 (IN); BLOM, Robert Martijn, 1031 HW Amsterdam (NL)
(74) Representative: Shell Legal Services IP
(86) International application number: PCT/EP2022/072440
(87) International publication number: WO 2023/017078

(56) References cited:
- EP-A1- 2 554 572
- WO-A1-97/20875
- DE-A1- 102014 215 384
- US-A1- 2013 079 429

## Description

### Field of the invention

The present invention relates to a process for preparing a polyurethane foam, to a polyurethane foam obtainable by said process, to a shaped article comprising said polyurethane foam, and to polyether polyol compositions that may be used in said process.

### Background of the invention

Polyurethane foams, in specific flexible polyurethane foams, have found extensive use in a multitude of industrial and consumer applications. For some applications, it is required that flexible polyurethane foams have a high resilience. A high resilience in a foam means that the foam, when used for example in cushions, provides better comfort properties. High-resilience (HR) polyurethane foams generally have a resilience of at least 40%.

Polyurethane foams are made by reacting a polyether polyol and a polyisocyanate in the presence of a blowing agent. In order to produce high-resilience (HR) polyurethane foams, polyols containing longer, elastic polyether chains are generally used.

Generally, polyether polyols are prepared by ring-opening polymerization of an alkylene oxide in the presence of an initiator having a plurality of active hydrogen atoms and a catalyst. Said alkylene oxide may be propylene oxide (PO) and/or ethylene oxide (EO). Further, said catalyst may be a basic catalyst, such as potassium hydroxide (KOH), or a composite metal cyanide complex catalyst, which latter catalyst is frequently also referred to as double metal cyanide (DMC) catalyst. Advantages associated with DMC-catalysed production of polyether polyols is that it is faster and more efficient than the traditional KOH catalysed process. Further, the DMC-catalyzed process can be run on a continuous system, rather than as a batch process, further increasing its efficiencies. Still further, the DMC-catalyzed process is more environmentally friendly and has a decreased carbon (CO₂) footprint.

Additionally, other components may also be present during polyurethane foam production, such as surfactants. The use of foam stabilisers (surfactants) is well known. Organosilicone surfactants are most conventionally applied as foam stabilisers in polyurethane foam production. In specific, it is known to use organosilicone surfactants comprising a polysiloxane-polyoxyalkylene copolymer as such foam stabilisers.

In the preparation of high-resilience (HR) polyurethane foams, generally a so-called "HR-grade" foam stabilizer is used which is such organosilicone surfactant wherein the amount of the polysiloxane part is relatively high, for example at least 25% or greater than 30 wt.%. An example of such HR-grade foam stabilizer is Tegostab B8681 commercially available from Evonik. For example, EP2675833B1 discloses the use of said Tegostab B8681 foam stabilizer in making HR polyurethane foams.

Generally, high-resilience (HR) polyurethane foams are made using polyether polyols having a relatively high molecular weight and a relatively high primary hydroxyl content (PHC). A relatively high primary PHC can be achieved by ensuring that in the last part of the polyether polyol preparation process, a relatively high amount of ethylene oxide (EO), which provides a primary hydroxyl group upon ring-opening, is present and no or a relatively low amount of other alkylene oxides, such as propylene oxide (PO), which mainly provide secondary hydroxyl groups upon ring-opening. Such a process is referred to as "EO-tipping".

The use of such HR polyether polyols is for example disclosed in US8901187B1, which discloses that an HR polyether polyol may be a polyalkyleneoxide polyether glycol having a molecular weight of from 4,500 to 6,000 g/mole, with 12 to 20 wt.% of ethylene oxide groups and the remaining 80 to 88 wt.% being propylene oxide groups, while having a hydroxyl functionality ranging from 2 to 8. In the Examples of US8901187B1, a "Polyol 1" is used which is described as an EO-tipped HR polyether polyol having a molecular weight of 4800 g/mole and an OH value of 35 mg KOH/g. Further, US8901187B1 also discloses the use of HR-grade foam stabilizers, including above-mentioned Tegostab B8681, when making HR polyurethane foams from said HR polyether polyols.

In practice, EO-tipping is only achieved using a KOH-catalysed polyether formation reaction. When attempting to use double metal cyanide (DMC) catalysts in the EO-tipping process, the combination of the more active catalyst and the inherent activity of primary OH groups results in long chains of EO on only a few of the polyether chains rather than the EO content being evenly distributed over all of the polyether chains.

As mentioned above, in order to produce HR polyurethane foams, polyols containing longer polyether chains and hence having a higher molecular weight, are generally used. Above-mentioned US8901187B1 discloses that in making the HR polyurethane foam, it is preferred not to use a polyalkyleneoxide polyether polyol having a molecular weight of less than 4,000 g/mole in addition to the above-described HR polyether polyol. Such lower molecular weight polyether polyols may also be referred to as conventional (or non-HR) polyether polyols and, according to US8901187B1, they may have a molecular weight of from 3,000 to 3,900 g/mole, an EO content of from 0 to 15 wt.% and a PO content of from 85 to 100 wt.%. Further, generally, conventional polyether polyols may have no or a relatively low PHC content, for example below 30%, whereas HR polyether polyols may have a relatively high PHC content, for example of from 60 to 99%. Processes for making HR polyurethane foams from polyether polyols including also polyether polyols made in presence of a double metal cyanide complex as catalyst are also described in WO 97/20875 A1, US 2013/079429 A1,EP 2 554 572 A1 and DE 10 2014 215384 A1.

In addition, it is known to use such conventional polyether polyol as a base polyol in a polymer polyol. Polymer polyols are dispersions of a solid polymer in a base polyol and may be prepared by polymerizing one or more ethylenically unsaturated monomers in the presence of such base polyol. If said base polyol is a conventional polyether polyol as described above, the polymer polyol may also be referred to as a conventional polymer polyol or, alternatively, as a so-called "high load bearing" (HLB) polymer polyol.

However, in practice, e.g. for logistic simplicity, when making an HR polyurethane foam it may still be desired to also use a certain amount of conventional polyether polyol, as such or as part of an HLB polymer polyol as described above, in addition to an HR polyether polyol as described above. For, unlike HR polyether polyols, conventional polyether polyols having no or a relatively low PHC content as described above, may be produced using a DMC catalyst resulting in the above-mentioned advantages as compared to a KOH-catalyzed polyether polyol preparation process.

It has been found that when preparing a high-resilience (HR) polyurethane foam using a combination of (i) a conventional, DMC-catalyzed polyether polyol, having a relatively low molecular weight, and (ii) an HR polyether polyol, having a relatively high molecular weight and a relatively high primary hydroxyl content (PHC), in the presence of an HR grade foam stabiliser having a relatively high polysiloxane content, for example at least 25% or greater than 30 wt.% as described above, the foam thus produced may be unstable, in specific as shown by a so-called "sink back" of the foam and/or by a relatively low foam height. Said "sink back" refers to a phenomenon wherein after reaching a certain height the foam height is reduced (i.e. the foam at the top "sinks back"). A disadvantage of such "sink back" is that the final foam density is not distributed evenly and/or that the final foam height is relatively low.

It is desirable to provide an improved process for the production of a high resilience (HR) polyurethane foam from (i) above-mentioned conventional polyether polyol obtainable by a DMC catalysed process, in specific a polymer polyol which contains such DMC catalysed polyether polyol as a base polyol, and (ii) an HR polyether polyol, wherein the polyurethane foam thus produced not only has a high resilience but may also have an increased stability, in specific no or less "sink back" and/or a sufficient foam height.

### Summary of the invention

Surprisingly it was found that such improved process may be provided by using two different foam stabilizers (b) (i) and (b) (ii), which are both organosilicone surfactants comprising a polysiloxane-polyoxyalkylene copolymer, wherein (I) the relative amount of the polysiloxane part in foam stabiliser (b) (i) is smaller than the relative amount of the polysiloxane part in foam stabiliser (b) (ii) and/or (II) the molecular weight of the polysiloxane-polyoxyalkylene copolymer in foam stabiliser (b) (i) is greater than the molecular weight of the polysiloxane-polyoxyalkylene copolymer in foam stabiliser (b) (ii), and wherein the weight ratio of foam stabiliser (b) (i) to foam stabiliser (b) (ii) is at most 0.5:1.

Accordingly, the present invention relates to a process for preparing a polyurethane foam having a resilience of at least 40%, comprising reacting a polyether polyol component (a) and a polyisocyanate in the presence of a blowing agent and a foam stabiliser component (b), wherein:
polyether polyol component (a) comprises:
   (a) (i) a polyether polyol which has a molecular weight lower than 4,500 g/mole and is prepared by ring-opening polymerization of an alkylene oxide in the presence of an initiator having a plurality of active hydrogen atoms and a composite metal cyanide complex catalyst, and
   (a) (ii) a polyether polyol which has a molecular weight of 4,500 g/mole or higher and which has a primary hydroxyl content of at least 30%; and
foam stabiliser component (b) comprises:
   (b) (i) a foam stabiliser which is an organosilicone surfactant comprising a polysiloxane-polyoxyalkylene copolymer, and
   (b) (ii) another foam stabiliser which is an organosilicone surfactant comprising a polysiloxane-polyoxyalkylene copolymer,
wherein the weight ratio of foam stabiliser (b) (i) to foam stabiliser (b) (ii) is at most 0.5:1,
and wherein at least one of the following requirements (I) and (II) are met:
   (I) the relative amount of the polysiloxane part in foam stabiliser (b) (i) is smaller than the relative amount of the polysiloxane part in foam stabiliser (b) (ii), and/or
   (II) the molecular weight of the polysiloxane-polyoxyalkylene copolymer in foam stabiliser (b) (i) is greater than the molecular weight of the polysiloxane-polyoxyalkylene copolymer in foam stabiliser (b)(ii).

Further, the present invention relates to a polyurethane foam obtainable by the above-described process, and to a shaped article comprising said polyurethane foam.

Still further, the present invention relates to a composition comprising above-described polyether polyol (a) (i) and above-described foam stabiliser component (b), and to a composition comprising a polymer polyol, which is prepared by polymerizing one or more ethylenically unsaturated monomers in the presence of a base polyol which is above-described polyether polyol (a) (i), and above-described foam stabiliser component (b).

### Detailed description of the invention

While the process and compositions of the present invention may be described in terms of "comprising", "containing" or "including" one or more various described steps and components, respectively, they can also "consist essentially of" or "consist of" said one or more various described steps and components, respectively.

In the context of the present invention, in a case where a composition comprises two or more components, these components are to be selected in an overall amount not to exceed 100 wt.%.

Where upper and lower limits are quoted for a property then a range of values defined by a combination of any of the upper limits with any of the lower limits is also implied.

The term "molecular weight" (or "MW") is used herein to refer to number average molecular weight, unless otherwise specified or context requires otherwise. The number average molecular weight of a polyol can be measured by gel permeation chromatography (GPC) or vapor pressure osmometry (VPO).

The term "hydroxyl (OH) value" or "hydroxyl (OH) number" is used herein to refer to the milligrams of potassium hydroxide equivalent to the hydroxyl content in one gram of polyol determined by wet method titration. Hence, said OH value or number is expressed in mg KOH/g.

The term "equivalent weight" (or "EW") is used herein to refer to the weight of polyol per reactive site. The equivalent weight is 56100 divided by the hydroxyl value of the polyol.

The term "functionality" (or "Fn") means nominal functionality and is used herein to refer to the number of reactive sites per molecule of polyol, wherein said (nominal) funtionality of a polyol is considered to be the same as that of its starter compound (initiator). The actual average functionality may be somewhat lower than the nominal functionality and is determined by the number average molecular weight of the polyol divided by the equivalent weight of the polyol.

The term "primary hydroxyl content" (or "PHC") is used herein to refer to the relative proportion (in %) of primary hydroxyl groups in a polyether polyol based on total number of hydroxyl groups including primary and secondary hydroxyl groups.

The terms "ethylene oxide content" and "propylene oxide content", respectively, in relation to a polyether polyol refer to those parts of the polyol which are derived from ethylene oxide and propylene oxide, respectively. Said contents may also be referred to as oxyethylene content and oxypropylene content, respectively. Further, said contents are based herein on total alkylene oxide weight.

The present invention concerns a process for preparing a polyurethane foam having a resilience of at least 40%, comprising reacting a polyether polyol component (a) and a polyisocyanate in the presence of a blowing agent and a foam stabiliser component (b). The polyurethane foam to be prepared in the present process is a flexible polyurethane foam. Further, said flexible polyurethane foam is suitably a slabstock foam. Within the present specification, by "slabstock" foam reference is made to a foam that is made by applying a free rise (unconstrained rise) of the foam.

In the present invention, a polyurethane foam having a resilience of at least 40% is prepared. Preferably, said resilience is at least 50%. Further, said resilience may be at most 80% or at most 70%. Resilience provides a measure of the surface elasticity of a foam and can relate to comfort or "feel". Resilience is typically measured by dropping a steel ball onto a foam and measuring how high the ball rebounds. This test is typically referred to as "ball rebound test". A suitable ball rebound test method is the "ASTM D3574 - Test H" method.

In the present invention, polyether polyol component (a) comprises polyether polyol (a) (i) and polyether polyol (a) (ii).

In the present invention, polyether polyol (a) (i) has a molecular weight lower than 4,500 g/mole, preferably lower than 4,000 g/mole, more preferably lower than 3,000 g/mole. Further, the molecular weight of polyether polyol (a) (i) may be at least 1,500 g/mole or at least 2,000 g/mole or at least 2,500 g/mole.

Preferably, polyether polyol (a) (i) comprises polyether chains containing propylene and/or butylene oxide content, more preferably propylene oxide (PO) content, and optionally ethylene oxide (EO) content.

Polyether polyol (a) (i) may comprise polyether chains containing of from 0 wt.% to at most 20 wt.%, more preferably at most 15 wt.%, most preferably at most 12 wt.% of EO content. Further, preferably polyether polyol (a) (i) comprises polyether chains containing at least 3 wt.%, more preferably at least 5 wt.%, most preferably at least 8 wt.% of EO content. Polyether polyol (a) (i) is not an "EO-tipped" polyether polyol. That is to say, if EO is present, the EO content is not present solely at the ends of the polyether chains. Typically, the ethylene oxide content present in the polyether chains of polyether polyol (a) (i) is distributed within the polyether chains. This is reflected in a relatively low primary hydroxyl content (PHC) for polyether polyol (a) (i) which may have a PHC which is at most 25% or at most 18% or at most 13%. Further, the PHC for polyether polyol (a) (i) may be at least 2% or at least 6% or at least 8%.

Preferably, the remainder of the alkylene oxide content in the polyether chains of polyether polyol (a) (i) is derived from propylene and/or butylene oxide. More preferably, the remainder of the alkylene oxide content in the polyether chains of polyether polyol (a) (i) is derived from propylene oxide. Therefore, the polyether chains of polyether polyol (a) (i) preferably comprise at least 75 wt.%, more preferably at least 80 wt.%, most preferably at least 85 wt.% of propylene oxide (PO) content. Further, the polyether chains of polyether polyol (a) (i) may comprise 100 wt.% of PO content and preferably comprise at most 97 wt.%, more preferably at most 95 wt.%, most preferably at most 92 wt.% of PO content.

In the present invention, the polyether chains of polyether polyol (a) (i) may comprise no ethylene oxide content but may comprise only propylene and/or butylene oxide content, suitably only propylene oxide content.

Polyether polyol (a) (i) is suitably based on a hydroxyl-containing starting compound, for example one or more polyfunctional alcohols, containing in the range of from 2 to 8 hydroxyl groups. Polyether polyols based on a mixture of such hydroxyl-containing starting compounds may be used. Examples of suitable polyfunctional alcohols comprise glycols, glycerol, pentaerythritol, trimethylolpropane, triethanolamine, sorbitol and mannitol. Advantageously, polyether polyol (a) (i) is based on a starting compound selected from glycerol or a mixture of propylene glycol (MPG) and glycerol.

Polyether polyol (a) (i) may have a nominal functionality of at least 2.0, preferably at least 2.3, more preferably at least 2.5, more preferably at least 2.6, most preferably at least 2.7. Said functionality may be at most 3.5, preferably at most 3.3, more preferably at most 3.1, most preferably at most 3.0.

Polyether polyol (a) (i) used in the process of the present invention preferably has a hydroxyl value of at least 25, more preferably at least 30, more preferably at least 35, more preferably at least 40, more preferably at least 45, most preferably at least 50. Further, polyether polyol (a) (i) preferably has a hydroxyl value of at most 70, more preferably at most 65, more preferably at most 60, more preferably at most 58, most preferably at most 56.

Further, in the present invention, polyether polyol (a) (i) is prepared by (i.e. obtained by a process comprising) ring-opening polymerization of an alkylene oxide in the presence of an initiator having a plurality of active hydrogen atoms and a composite metal cyanide complex catalyst.

Thus, in the process for preparing polyether polyol (a) (i), a composite metal cyanide complex catalyst is used. Composite metal cyanide complex catalysts are frequently also referred to as double metal cyanide (DMC) catalysts. A composite metal cyanide complex catalyst is typically represented by the following formula (1):

(1) M¹ₐ[M²_{b}(CN)_{c}]_{d}.e(M¹_{f}X_{g}).h(H₂0).i(R)

wherein each of M¹ and M² is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), M¹ is preferably a metal selected from Zn(II) or Fe(II). In the above formula, M² is preferably a metal selected from Co(III) or Fe(III). However, other metals and oxidation states may also be used, as is known in the art.

In the above formula (1), R is an organic ligand and is preferably at least one compound selected from the group consisting of an alcohol, an ether, a ketone, an ester, an amine and an amide. As such an organic ligand, a watersoluble one may be used. Specifically, one or more compounds selected from tert-butyl alcohol, n-butyl alcohol, iso-butyl alcohol, tert-pentyl alcohol, isopentyl alcohol, N, N-dimethyl acetamide, glyme (ethylene glycol dimethyl ether), diglyme (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly (propylene glycol) having a number average molecular weight in the range of from 500 to 2,500 Dalton, preferably 800 to 2,200 Dalton, may be used as the organic ligand or one of the organic ligands. Most preferably, such poly(propylene glycol) is used in combination with tert-butyl alcohol as organic ligands. The composite metal cyanide complex catalyst can be produced by known production methods.

In the present invention, polyether polyol (a) (ii) has a molecular weight of 4,500 g/mole or higher, preferably at least 4,800 g/mole, more preferably at least 5,000 g/mole, more preferably at least 6,000 g/mole, more preferably at least 8,000 g/mole, more preferably at least 10,000 g/mole, most preferably at least 11,000 g/mole. Further, the molecular weight of polyether polyol (a) (ii) may be at most 19,000 g/mole or at most 16,000 g/mole or at most 14,000 g/mole or at most 13,000 g/mole.

Preferably, polyether polyol (a) (ii) comprises polyether chains containing at most 30 wt.%, more preferably at most 25 wt.%, most preferably at most 20 wt.% of ethylene oxide (EO) content. Further, preferably polyether polyol (a) (ii) comprises polyether chains containing at least 5 wt.%, more preferably at least 8 wt.%, most preferably at least 12 wt.% of EO content. Polyether polyol (a) (ii) is preferably an "EO-tipped" polyether polyol. That is to say, if EO is present, EO content is present at the ends of the polyether chains. This is reflected in a relatively high primary hydroxyl content (PHC) for polyether polyol (a) (ii) which may have a PHC which is at most 99% or at most 95% or at most 90% or at most 85% or at most 80%. Further, the PHC for polyether polyol (a) (ii) may be at least 50% or at least 60% or at least 65% or at least 70% or at least 75%.

Preferably, the remainder of the alkylene oxide content in the polyether chains of polyether polyol (a) (ii) is derived from propylene and/or butylene oxide. More preferably, the remainder of the alkylene oxide content in the polyether chains of polyether polyol (a) (ii) is derived from propylene oxide. Therefore, the polyether chains of polyether polyol (a) (ii) preferably comprise at least 70 wt.%, more preferably at least 75 wt.%, most preferably at least 80 wt.% of propylene oxide (PO) content. Further, the polyether chains of polyether polyol (a) (ii) preferably comprise at most 95 wt.%, more preferably at most 92 wt.%, most preferably at most 88 wt.% of PO content.

Polyether polyol (a) (ii) is suitably based on a hydroxyl-containing starting compound, for example one or more polyfunctional alcohols, containing in the range of from 2 to 8 hydroxyl groups. Polyether polyols based on a mixture of such hydroxyl-containing starting compounds may be used. Examples of suitable polyfunctional alcohols comprise glycols, glycerol, pentaerythritol, trimethylolpropane, triethanolamine, sorbitol and mannitol. Advantageously, polyether polyol (a) (ii) is based on a starting compound which comprises sorbitol.

Polyether polyol (a) (ii) may have a nominal functionality of at least 2.0, preferably at least 3.0, more preferably at least 4.0, more preferably at least 4.5, most preferably at least 5.0. Said functionality may be at most 8.0, preferably at most 7.0, more preferably at most 6.5, most preferably at most 6.0.

Polyether polyol (a) (ii) used in the process of the present invention preferably has a hydroxyl value of at least 5, more preferably at least 10, more preferably at least 15, more preferably at least 20, most preferably at least 25. Further, polyether polyol (a) (ii) preferably has a hydroxyl value of at most 60, more preferably at most 55, more preferably at most 50, more preferably at most 45, more preferably at most 40, most preferably at most 35.

Polyether polyol (a) (ii) may be prepared by any suitable process known in the art, for example by ring-opening polymerization of alkylene oxide onto the hydroxyl containing starting material in the presence of a catalyst. Said catalyst used in preparing polyether polyol (a) (ii) is preferably a basic catalyst, more preferably potassium hydroxide (KOH). Further, said catalyst may be a composite metal cyanide complex catalyst as described above for preparing polyether polyol (a) (i).

In the present invention, the weight ratio of polyether polyol (a) (i) to polyether polyol (a) (ii) may vary widely and may be of from 1:99 to 99:1 or of from 1:70 to 70:1 or of from 1:40 to 40:1 or of from 1:20 to 20:1 or of from 1:10 to 10:1 or of from 1:5 to 5:1 or of from 1:3 to 3:1. Preferably, said weight ratio is smaller than 1:1. Preferably, said weight ratio is at least 0.01:1, more preferably at least 0.1:1, more preferably at least 0.2:1, more preferably at least 0.3:1, most preferably at least 0.4:1. Further, Preferably, said weight ratio is at most 100:1, more preferably at most 10:1, more preferably at most 5:1, more preferably at most 2:1, more preferably at most 1.5:1, more preferably at most 1:1, most preferably at most 0.8:1.

In the present invention, foam stabiliser component (b) comprises foam stabiliser (b) (i) and foam stabiliser (b) (ii).

Foam stabilisers (b) (i) and (b) (ii) are both organosilicone surfactants comprising a polysiloxane-polyoxyalkylene copolymer. A polysiloxane polymer (also referred to as "silicone") is a polymer comprising multiple repeating siloxane units of formula -R₂Si-O- wherein R is an organic group. The organic group R is preferably an alkyl group and may be a C₁₋₄ alkyl group, for example a methyl or ethyl group, most preferably a methyl group. In the above-mentioned polysiloxane-polyoxyalkylene copolymer, for foam stabilisers (b) (i) and (b) (ii), part of the organic groups R in the polysiloxane have been replaced by an organic group comprising a polyoxyalkylene polymer which is a polymer comprising multiple repeating oxyalkylene units which may originate from one or more alkylene oxides, for example propylene oxide and/or ethylene oxide. Further, the linkage which, in the polysiloxane-polyoxyalkylene copolymer for foam stabilisers (b) (i) and (b) (ii), links the polysiloxane part to the polyoxyalkylene part, may comprise a Si-O-C moiety or a Si-C moiety (wherein "Si", "O" and "C" stand for silicon, oxygen and carbon atoms, respectively).

For foam stabiliser (b) (i), the amount of the polysiloxane part, based on the total amount of the polysiloxane-polyoxyalkylene copolymer, may be at most 40 wt.% or at most 30 wt.% or smaller than 30 wt.%. Further, the amount of said polysiloxane part may be at least 10 wt.%. Accordingly, for foam stabiliser (b) (i), the amount of the polyoxyalkylene part, based on the total amount of the polysiloxane-polyoxyalkylene copolymer, may be at least 60 wt.% or greater than 70 wt.%. Further, the amount of said polyoxyalkylene part may be at most 90 wt.%.

For foam stabiliser (b) (ii), the amount of the polysiloxane part, based on the total amount of the polysiloxane-polyoxyalkylene copolymer, may be at least 25% or greater than 30 wt.%. Further, the amount of said polysiloxane part may be at most 90 wt.%. Accordingly, for foam stabiliser (b) (ii), the amount of the polyoxyalkylene part, based on the total amount of the polysiloxane-polyoxyalkylene copolymer, may be at most 75% or at most 70 wt.% or smaller than 70 wt.%. Further, the amount of said polyoxyalkylene part may be at least 10 wt.%.

Further, in the present invention, the above-mentioned relative amount of the polysiloxane part in foam stabiliser (b) (i) may be smaller than that in foam stabiliser (b) (ii). Therefore, the ratio of said relative amount of the polysiloxane part in foam stabiliser (b) (ii) to said relative amount of the polysiloxane part in foam stabiliser (b) (i) may be greater than 1:1. This is above-mentioned requirement (I), wherein at least one of above-mentioned requirements (I) and (II) should be met in the present invention. Further, said ratio may suitably be of from 1.2:1 to 10:1 or of from 1.5:1 to 8:1 or of from 1.8:1 to 6:1 or of from 2:1 to 4:1.

For foam stabiliser (b) (i), the polyoxyalkylene part preferably comprises ethyleneoxy units in addition to other alkylenoxy units, comprising propyleneoxy units and/or butyleneoxy units, said other alkylenoxy units preferably comprising propyleneoxy units. The amount of ethyleneoxy units, based on the total amount of alkyleneoxy units in the polyoxyalkylene part of foam stabiliser (b) (i), may be at least 25 wt.% or at least 30 wt.% or at least 35 wt.%. Further, said amount of ethyleneoxy units may be at most 70 wt.% or at most 65 wt.% or at most 60 wt.% or at most 55 wt.%. Accordingly, the amount of the other alkylenoxy units, based on the total amount of alkyleneoxy units in the polyoxyalkylene part of foam stabiliser (b) (i), may be at least 30 wt.% or at least 35 wt.% or at least 40 wt.% or at least 45 wt.%. Further, said amount of other alkylenoxy units may be at most 75 wt.% or at most 70 wt.% or at most 65 wt.%.

For foam stabiliser (b) (ii), the polyoxyalkylene part may comprise ethyleneoxy units and/or other alkylenoxy units, comprising propyleneoxy units and/or butyleneoxy units, said other alkylenoxy units preferably comprising propyleneoxy units. The amount of ethyleneoxy units, based on the total amount of alkyleneoxy units in the polyoxyalkylene part of foam stabiliser (b) (ii), may be of from 0 to 100 wt.%. Further, the amount of said other alkylenoxy units, based on the total amount of alkyleneoxy units in the polyoxyalkylene part of foam stabiliser (b) (ii), may be of from 0 to 100 wt.%.

It is preferred for both foam stabilisers (b) (i) and (b) (ii) that the terminal alkyleneoxy unit of the polyoxyalkylene part does not comprise an hydroxyl (-OH) group but an -OR group wherein R is not a hydrogen atom but an organic group, for example an alkyl or aryl group, preferably an alkyl group. Said terminal alkyleneoxy unit is not attached (i.e. not directly) to the polysiloxane part.

For foam stabiliser (b) (i), the molecular weight of the polysiloxane-polyoxyalkylene copolymer may be at least 2,000 g/mole or at least 5,000 g/mole or at least 10,000 g/mole or at least 20,000 g/mole. Further, said molecular weight may be at most 100,000 g/mole or at most 80,000 g/mole or at most 50,000 g/mole or at most 35,000 g/mole.

For foam stabiliser (b) (ii), the molecular weight of the polysiloxane-polyoxyalkylene copolymer may be at least 200 g/mole or at least 300 g/mole or at least 400 g/mole or at least 500 g/mole. Further, said molecular weight may be at most 10,000 g/mole or at most 5,000 g/mole or at most 2,500 g/mole or at most 1,500 g/mole.

Further, in the present invention, the above-mentioned molecular weight of the polysiloxane-polyoxyalkylene copolymer in foam stabiliser (b) (i) may be greater than that in foam stabiliser (b) (ii). Therefore, the ratio of the molecular weight of the polysiloxane-polyoxyalkylene copolymer in foam stabiliser (b) (i) to the molecular weight of the polysiloxane-polyoxyalkylene copolymer in foam stabiliser (b) (ii) may be greater than 1:1. This is above-mentioned requirement (II), wherein at least one of above-mentioned requirements (I) and (II) should be met in the present invention. Further, said ratio may suitably be of from 2:1 to 500:1 or of from 3:1 to 100:1 or of from 4:1 to 50:1 or of from 5:1 to 20:1.

For foam stabiliser (b) (i), the molecular weight of the polyoxyalkylene part in the polysiloxane-polyoxyalkylene copolymer may be at least 800 g/mole or at least 1,000 g/mole or at least 2,000 g/mole. Further, said molecular weight may be at most 5,000 g/mole or at most 4,000 g/mole or at most 3,000 g/mole.

For foam stabiliser (b) (ii), the molecular weight of the polyoxyalkylene part in the polysiloxane-polyoxyalkylene copolymer may be at most 1,500 g/mole or smaller than 1,000 g/mole or smaller than 800 g/mole. Further, said molecular weight may be at least 200 g/mole or at least 300 g/mole or at least 400 g/mole.

Further, in the present invention, the above-mentioned molecular weight of the polyoxyalkylene part in the polysiloxane-polyoxyalkylene copolymer in foam stabiliser (b) (i) may be greater than that in foam stabiliser (b) (ii). Therefore, the ratio of the molecular weight of the polyoxyalkylene part in the polysiloxane-polyoxyalkylene copolymer in foam stabiliser (b) (i) to the molecular weight of the polyoxyalkylene part in the polysiloxane-polyoxyalkylene copolymer in foam stabiliser (b) (ii) may be greater than 1:1. Further, said ratio may suitably be of from 1.5:1 to 25:1 or of from 2:1 to 15:1 or of from 2.5:1 to 10:1 or of from 3:1 to 8:1.

For foam stabiliser (b) (i), the polydispersity index of the polysiloxane-polyoxyalkylene copolymer may be at least 1.2 or at least 1.5 or at least 1.8 or at least 2.0. Further, said polydispersity index may be at most 5.0 or at most 4.0 or at most 3.0. Within the present specification, "polydispersity index" refers to the ratio of the weight average molecular weight (Mw) to the number average molecular weight (Mn), i.e. Mw/Mn. The higher the polydispersity index, the broader the molecular weight distribution.

For foam stabiliser (b)(ii), the polydispersity index of the polysiloxane-polyoxyalkylene copolymer may be smaller than 2.0 or smaller than 1.8 or smaller than 1.5 or smaller than 1.2. Further, said polydispersity index is at least 1.00 or at least 1.01 or at least 1.05 or at least 1.10.

Further, in the present invention, the above-mentioned polydispersity index for foam stabiliser (b)(i) may be greater than that for foam stabiliser (b)(ii). Therefore, the ratio of the polydispersity index for foam stabiliser (b)(i) to the polydispersity index for foam stabiliser (b)(ii) may be greater than 1:1. Further, said ratio may suitably be of from 1.2:1 to 5:1 or of from 1.5:1 to 4:1 or of from 1.8:1 to 3.5:1 or of from 2:1 to 3:1.

In the present invention, the weight ratio of foam stabiliser (b)(i) to foam stabiliser (b)(ii) is at most 0.5:1, and may be at most 0.4:1 or at most 0.3:1 or at most 0.2:1 or at most 0.1:1 or at most 0.05:1. Further, said weight ratio may be at least 0.001:1 or at least 0.01:1 or at least 0.02:1 or at least 0.03:1.

Further, the amount of foam stabiliser (b)(i), based on total polyol amount, may be of from 50 to 1,000 parts per million by weight (ppmw). Preferably, the latter amount is at least 50 ppmw, more preferably at least 80 ppmw, more preferably at least 100 ppmw, more preferably at least 130 ppmw, more preferably at least 150 ppmw, most preferably at least 170 ppmw. Further, preferably, the latter amount is at most 1,000 ppmw, more preferably at most 700 ppmw, more preferably at most 500 ppmw, more preferably at most 300 ppmw, more preferably at most 250 ppmw, most preferably at most 230 ppmw.

Still further, the amount of foam stabiliser (b)(ii), based on total polyol amount, may be of from 2,000 to 30,000 parts per million by weight (ppmw). Preferably, the latter amount is at least 2,000 ppmw, more preferably at least 2,500 ppmw, more preferably at least 3,000 ppmw, more preferably at least 3,500 ppmw, most preferably at least 4,000 ppmw. Further, preferably, the latter amount is at most 30,000 ppmw, more preferably at most 20,000 ppmw, more preferably at most 10,000 ppmw, more preferably at most 8,000 ppmw, more preferably at most 6,000 ppmw, most preferably at most 5,000 ppmw.

By said "total polyol amount" in the above-mentioned paragraphs, reference is made to the total amount of all polyether polyols including polyether polyol (a) (i), polyether polyol (a) (ii) and any other polyether polyol.

Commercially available organosilicone surfactants that may suitably be used in the present invention as foam stabiliser (b) (i) comprise Niax L-580, Niax L-594plus, Niax L-595, Niax L-618 and Niax L-895, Niax L-895LV, Niax L-618, Niax L-620, Niax L-635, Niax L-650, Niax L-655, Niax L-670, Niax L-818, Niax L-820, Niax L-850, Niax L-855, Niax L-858 and Niax L-895 which are all commercially available from Momentive Performance Materials, and Tegostab B4900, Tegostab BF2370, Tegostab B8266, Tegostab B8291, Tegostab BF2470, Tegostab B8002, Tegostab B8040LV, Tegostab B8052, Tegostab B8155, Tegostab B8189, Tegostab B8232 and Tegostab B8239 which are all commercially available from Evonik.

Commercially available organosilicone surfactants that may suitably be used in the present invention as foam stabiliser (b) (ii) comprise Niax L-2100, Niax L-3684, Niax L-3685 and Niax L-500 which are all commercially available from Momentive Performance Materials, and Tegostab B8681, Tegostab B8707LF2, Tegostab B8773LF2 and Tegostab B8783LF2 which are all commercially available from Evonik.

The above-described foam stabiliser (b) (i) is normally used in the preparation of conventional, non-HR polyurethane foam, whereas the above-described foam stabiliser (b) (ii) is normally used in the preparation of HR polyurethane foam. However, surprisingly, the present inventors have found that foam stabiliser (b) (i) can also be used, advantageously in a relatively low amount, in combination with foam stabiliser (b) (ii), in the preparation of HR polyurethane foam from a polyisocyanate and a polyether polyol mixture comprising polyether polyols (a) (i) and (a) (ii), of which polyether polyol (a) (i) is prepared using a composite metal cyanide complex catalyst (i.e. a DMC catalyst), thereby advantageously also preventing foam instability issues (sink back) which may be caused by at least one of said polyether polyols being a DMC-catalyzed polyol.

Polyether polyols (a) (i) and (a) (ii) may be provided as a polyol mixture, or the polyols may be provided separately to form a polyol mixture in situ. Further, in the present invention, one or more polymers may be dispersed in polyether polyol (a) (i) and/or polyether polyol (a) (ii), preferably in polyether polyol (a) (i). In particular, a solid polymer may be dispersed therein, thereby forming a "polymer polyol". The base polyol of such polymer polyol is polyether polyol (a) (i) and/or polyether polyol (a) (ii), preferably polyether polyol (a) (i). Thus, in general, a polymer polyol is a dispersion of a solid polymer in a liquid polyol.

Preferably, in the present invention, polyether polyol component (a) comprises a polymer polyol which is prepared by polymerizing one or more ethylenically unsaturated monomers in the presence of a base polyol which is polyether polyol (a)(i).

Polymer polyols are well known in the art and may be prepared by polymerising one or more ethylenically unsaturated monomers in the presence of the base polyol and further in the presence of a polymerization initiator, optionally a macromer and optionally a chain transfer agent.

Examples of such polymer polyol systems and methods for their preparation are disclosed in, for instance, EP076491A2, EP0343907A2, EP0495551A2, WO2008122581 and WO2012017016. Polyurea or polyurethane polymers are also known to be useful as the dispersed polymer in polymer polyols instead of the polymers based on ethylenically unsaturated monomers.

The polymer dispersed in the base polyol, may in principle be any such polymer known to be applicable for this purpose. Thus, suitable polymers include the polymers based on ethylenically unsaturated monomers and particularly polymers of vinyl aromatic hydrocarbons, like styrene, alphamethyl styrene, methyl styrene and various other alkylsubstituted styrenes. Of these, the use of styrene is preferred. The vinyl aromatic monomer may be used alone or in combination with other ethylenically unsaturated monomers, such as acrylonitrile, methacrylonitrile, vinylidene chloride, various acrylates and conjugated dienes like 1,3-butadiene and isoprene. Preferred polymers, however, are polystyrene and styrene-acrylonitrile (SAN) copolymers. Another suitable class of polymers are the polyurea and polyurethane polymers. Particularly the condensation products of primary amines or polyhydric alcohol amines and aromatic diisocyanates are very useful in this respect. One suitable polymer is the condensation product of triethanolamine and toluene diisocyanate (TDI).

The dispersed polymer is suitably present in an amount of from 10 to 55 wt.%, suitably 15 to 55 wt.%, more suitably 30 to 45 wt.%, based on total weight of the polyol and polymer.

The present invention also relates to a composition comprising polyether polyol (a) (i) and foam stabiliser (b) (i).

Further, the present invention relates to a composition comprising a polymer polyol, which is prepared by polymerizing one or more ethylenically unsaturated monomers in the presence of a base polyol which is polyether polyol (a) (i), and foam stabiliser (b) (i).

In the above-mentioned two compositions, the amount of foam stabiliser (b) (i), based on the amount of polyether polyol prepared in the presence of a composite metal cyanide complex catalyst including the amount of polyether polyol (a) (i), may be at least 50 parts per million by weight (ppmw) or at least 100 pmw or at least 300 pmw or at least 400 pmw or at least 500 pmw or at least 600 pmw. Further, said amount may be at most 5,000 ppmw or at most 3,000 ppmw or at most 2,000 ppmw or at most 1,500 ppmw or at most 1,000 ppmw or at most 800 ppmw.

Further, each of the above-mentioned two compositions may additionally comprise polyether polyol (a) (ii) and/or foam stabiliser (b)(ii).

All of the above-described features, embodiments and preferences in relation to polyether polyols (a) (i) and (a) (ii) and foam stabilisers (b) (i) and (b) (ii) as used in the present polyurethane preparation process, are equally applicable to polyether polyol (a) (i), optional polyether polyol (a) (ii), foam stabiliser (b) (i) and optional foam stabiliser (b) (ii) from the above-mentioned two compositions of the present invention.

In the present invention, polyether polyol component (a) and a polyisocyanate are reacted in the presence of a blowing agent and foam stabiliser component (b). The polyisocyanate may be an aromatic polyisocyanate or an aliphatic polyisocyanate, preferably an aromatic polyisocyanate.

The aromatic polyisocyanate may for example comprise tolylene diisocyanate (TDI) or polymeric TDI, xylylene diisocyanate, tetramethylxylylene diisocyanate, methylene diphenyl diisocyanate (MDI) or polymeric MDI (i.e. polymethylene polyphenyl isocyanate), or a modified product thereof. Preferably, the aromatic polyisocyanate comprises tolylene diisocyanate (TDI), i.e. non-polymeric TDI. The TDI may be a mixture of 80 wt.% of 2,4-TDI and 20 wt.% of 2,6-TDI, which mixture is sold as "TDI-80".

Further, the aliphatic polyisocyanate may for example comprise hexamethylene diisocyanate, dicyclohexylmethane diisocyanate, lysine diisocyanate or isophorone diisocyanate, or a modified product thereof.

Further, the polyisocyanate may be any mixture of two or more of the polyisocyanates mentioned above. For example, the polyisocyanate may be a mixture of TDI and MDI, in particular a mixture wherein the weight ratio of TDI:MDI varies from 10:90 to 90:10.

In the present invention, the blowing agent may be a chemical blowing agent or a physical (non-chemical) blowing agent. Within the present specification, by "chemical blowing agent" reference is made to a blowing agent that may only provide a blowing effect after it has chemically reacted with another compound.

Preferably, in the present invention, the blowing agent is a chemical blowing agent. Further, preferably, the chemical blowing agent comprises water. Water reacts with isocyanate groups of the polyisocyanate, thereby releasing carbon dioxide which causes the blowing to occur. Further, preferably, substantially no physical (non-chemical) blowing agent is added in the present process.

However, other suitable blowing agents, such as for example, acetone, gaseous or liquid carbon dioxide, halogenated hydrocarbons, aliphatic alkanes and alicyclic alkanes may be employed additionally or alternatively.

Due to the ozone depleting effect of fully chlorinated, fluorinated alkanes (CFC's) the use of this type of blowing agent is generally not preferred, although it is possible to use them within the scope of the present invention. Halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. One suitable HCFC type blowing agent is 1-chloro-l,1-difluoroethane.

In the present invention, in a case where the blowing agent comprises water, water may be used in an amount of from 0.1 to 10 parts per hundred parts by weight of polyol (pphp), more preferably of from 0.5 to 8 pphp, more preferably of from 1 to 6 pphp, more preferably of from 1.5 to 4 pphp. In case of halogenated hydrocarbons, aliphatic alkanes and alicyclic alkanes, the amount of the blowing agent may be of from 1 to 50 parts per hundred parts by weight of polyol (pphp), suitably of from 1 to 30 pphp, more suitably of from 1 to 20 pphp.

The above blowing agents may be used singly or in mixtures of two or more.

In the present process, the isocyanate index (or NCO index) may be at most 150, more suitably at most 140, more suitably at most 130, more suitably at most 125, most suitably at most 120. The isocyanate index is preferably higher than 90, more preferably higher than 100, most preferably higher than 105.

Within the present specification, "isocyanate index" is calculated as 100 times the mole ratio of -NCO groups (isocyanate groups) to NCO-reactive groups in the reaction mixture. In other words, the "isocyanate index is defined as: [(actual amount of isocyanate)/(theoretical amount of isocyanate)]*100, wherein the "theoretical amount of isocyanate" equals 1 equivalent isocyanate (NCO) group per 1 equivalent isocyanate-reactive group.

Such "isocyanate-reactive groups" as referred to above include for example OH groups from the polyether polyols and from any water that may be used as a blowing agent. Isocyanate groups also react with water.

Additionally, other components may also be present during the polyurethane foam preparation process of the present invention, such as one or more polyurethane catalysts, surfactants and/or cross-linking agents.

Polyurethane catalysts are known in the art and include many different compounds. For the purpose of the present invention, suitable catalysts include tin-, lead- or titanium-based catalysts, preferably tin-based catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis(2,2'-dimethylamino)ethyl ether, trimethylamine, triethylamine, triethylenediamine and dimethylethanolamine (DMEA). Examples of commercially available tertiary amine catalysts are those sold under the tradenames Niax, Tegoamin and Dabco (all trademarks). The catalyst is typically used in an amount of from 0.01 to 2.0 parts by weight per hundred parts by weight of polyether polyol (pphp). Preferred amounts of catalyst are from 0.05 to 1.0 pphp.

The use of cross-linking agents in the production of polyurethane foams is also well known. Polyfunctional glycol amines are known to be useful for this purpose. The polyfunctional glycol amine which is most frequently used and is also useful in the preparation of polyurethane foams, especially flexible polyurethane foams, is diethanol amine, often abbreviated as DEOA. If used at all, the cross-linking agent is applied in amounts up to 4 parts by weight per hundred parts by weight of polyol (pphp), but amounts in the range of from 0.01 to 2 pphp are more suitably applied, most suitably 0.01 to 0.5 pphp.

In addition, other well known auxiliaries, such as colorants, flame retardants and fillers, may also be used during the polyurethane foam preparation process of the present invention.

In specific, an auxiliary which promotes cell opening may also be used during the polyurethane foam preparation process of the present invention. In the present invention, such cell opener may be polyether polyol (a) (iii) as further described below. Said cell opener may be used in a ratio of from 0.01 to 10 wt.%, based on the total weight of polyether polyols (a) (i) and (a) (ii), or of from 0.05 to 5 wt.% or of from 0.1 to 3 wt.% or of from 0.2 to 2 wt.% or of from 0.3 to 1 wt.%.

Polyether polyol (a) (iii) may have a molecular weight lower than 8,000 g/mole, preferably lower than 6,000 g/mole, more preferably lower than 5,000 g/mole. Further, the molecular weight of polyether polyol (a) (i) may be at least 2,000 g/mole or at least 3,000 g/mole or at least 4,000 g/mole.

Preferably, polyether polyol (a) (iii) comprises polyether chains containing at most 95 wt.%, more preferably at most 85 wt.%, most preferably at most 80 wt.% of ethylene oxide (EO) content. Further, preferably polyether polyol (a) (iii) comprises polyether chains containing at least 50 wt.%, more preferably at least 60 wt.%, most preferably at least 70 wt.% of EO content. Polyether polyol (a) (iii) may be an "EO-tipped" polyether polyol. That is to say, EO content is present at the ends of the polyether chains. This is reflected in a relatively high primary hydroxyl content (PHC) for polyether polyol (a) (iii) which may have a PHC which is at most 100% or at most 98% or at most 95%. Further, the PHC for polyether polyol (a) (iii) may be at least 70% or at least 75% or at least 80% or at least 85% or at least 88%.

Preferably, the remainder of the alkylene oxide content in the polyether chains of polyether polyol (a) (iii) is derived from propylene and/or butylene oxide. More preferably, the remainder of the alkylene oxide content in the polyether chains of polyether polyol (a) (iii) is derived from propylene oxide. Therefore, the polyether chains of polyether polyol (a) (iii) preferably comprise at least 5 wt.%, more preferably at least 15 wt.%, most preferably at least 20 wt.% of propylene oxide (PO) content. Further, the polyether chains of polyether polyol (a) (iii) preferably comprise at most 50 wt.%, more preferably at most 40 wt.%, most preferably at most 30 wt.% of PO content.

Polyether polyol (a) (iii) is suitably based on a hydroxyl-containing starting compound, for example one or more polyfunctional alcohols, containing in the range of from 2 to 8 hydroxyl groups. Polyether polyols based on a mixture of such hydroxyl-containing starting compounds may be used. Examples of suitable polyfunctional alcohols comprise glycols, glycerol, pentaerythritol, trimethylolpropane, triethanolamine, sorbitol and mannitol. Advantageously, polyether polyol (a) (iii) is based on a starting compound which comprises propylene glycol (MPG).

Polyether polyol (a) (iii) may have a nominal functionality of at least 2.0, preferably at least 2.3, more preferably at least 2.5, more preferably at least 2.6, most preferably at least 2.7. Said functionality may be at most 3.5, preferably at most 3.3, more preferably at most 3.1, most preferably at most 3.0.

Polyether polyol (a) (iii) used in the process of the present invention preferably has a hydroxyl value of at least 10, more preferably at least 15, more preferably at least 20, more preferably at least 25, most preferably at least 30. Further, polyether polyol (a) (iii) preferably has a hydroxyl value of at most 60, more preferably at most 50, more preferably at most 45, most preferably at most 40.

Polyether polyol (a) (iii) may be prepared by any suitable process known in the art, for example by ring-opening polymerization of alkylene oxide onto the hydroxyl containing starting material in the presence of a catalyst. Said catalyst used in preparing polyether polyol (a) (iii) is preferably a basic catalyst, more preferably potassium hydroxide (KOH). Further, said catalyst may be a composite metal cyanide complex catalyst as described above for preparing polyether polyol (a) (i).

The process of the invention may involve combining the polyether polyols, the polyisocyanate, the blowing agent, the foam stabilisers, a catalyst and optionally crosslinker, flame retardant, colorant and/or filler, in any suitable manner to obtain the polyurethane foam. For example, the present process may comprise stirring the polyether polyols, the blowing agent, the foam stabilisers, a catalyst and any other optional component(s) except the polyisocyanate together for a period of at least 30 seconds; and adding the polyisocyanate under stirring.

Further, the process of the invention may comprise forming the foam into a shaped article before it fully sets. Suitably, forming the foam may comprise pouring the liquid mixture containing all components into a mould before gelling is complete.

The present invention also relates to a polyurethane foam obtainable by the above-described process, and to a shaped article comprising said polyurethane foam.

The invention is further illustrated by the following Examples.

### Examples

The materials (polyols, polyisocyanate and other components) used in the polyurethane foam experiments are described in Table 1 below.

**Table 1**

| | POLYOLS |
|---|---|
| Polyol A | An EO/PO-based, EO-tipped polyether polyol which is made using KOH catalyst and sorbitol starter and has the following properties: MW = 12,000 g/mole; OH number = 28.8 mg KOH/g; EO content = 16.5 wt.%; PO content = 83.5 wt.%; PHC = 79.2%; functionality = 5.4. Polyol A corresponds with polyether polyol (a) (ii) used in the present invention. |
| Polyol B | CARADOL^{™} SP30-47, commercially available from Shell Chemicals: dispersion of styrene-acrylonitrile (SAN) copolymer (solid content = 43 wt.%) in a base polyol, which base polyol is an EO/PO-based polyether polyol made using KOH catalyst and glycerol starter and has the following properties: MW = 2,900 g/mole; OH number = 54 mg KOH/g; EO content = 11 wt.%; PO content = 89 wt.%; PHC = 8%; functionality = 2.8. |
| Polyol C | Polymer polyol commercially available from Shell Chemicals: dispersion of styrene-acrylonitrile (SAN) copolymer (solid content = |
| | 42 wt.%) in a base polyol, which base polyol is an EO/PO-based polyether polyol made using DMC catalyst and glycerol starter and has the following properties: MW = 2,900 g/mole; OH number = 54 mg KOH/g; EO content = 11 wt.%; PO content = 89 wt.%; PHC = 10%; functionality = 2.8. The base polyol in Polyol C corresponds with polyether polyol (a) (i) used in the present invention. |
| Polyol D | CARADOL^{™} SA36-02, commercially available from Shell Chemicals: an EO/PO-based, EO-tipped polyether polyol which is made using KOH catalyst and monopropylene glycol starter and has the following properties: MW = 4,700 g/mole; OH number = 36 mg KOH/g; EO content = 75 wt.%; PO content = 25 wt.%; PHC = 90%; functionality = 2.8. Polyol D corresponds with above-described polyether polyol (a) (iii). |

| | POLYISOCYANATE |
|---|---|
| TDI-80 | 80:20 (by weight) blend of 2,4- and 2,6-isomers of TDI commercially available from Mitsui; free NCO content = 48.3% |

| | OTHER COMPONENTS |
|---|---|
| Dabco T-9 | Stannous octoate catalyst, commercially available from Air Products and Chemicals |
| Niax A33 | Amine based catalyst available from Momentive Performance Materials |
| Niax A1 | Amine based catalyst available from Momentive Performance Materials |
| Niax L580 | Silicone based surfactant commercially available from Momentive Performance Materials. Niax L580 corresponds with foam stabiliser (b) (i) used in the present invention. |
| Tegostab B8681 | Silicone based surfactant commercially available from Evonik. Tegostab B8681 corresponds with foam stabiliser (b) (ii) used in the present invention. |
| Diethanol amine | Cross-linking agent |
| Ortegol 204 | Cross-linking agent commercially available from Evonik |

| | |
|---|---|
| MW = molecular weight ppmw = parts per million by weight PHC = primary hydroxyl content | |

One or more of the following properties of the foams thus obtained were measured:
1) Density according to ASTM D3574 (sample size 100*100*50 mm³, 2 samples/foam).
2) Resilience according to ASTM D3574 - Test H (sample size 100*100*50 mm³, 2 samples/foam), which involves dropping a 16 mm diameter steel ball bearing onto a sample and measuring the percentage height that the ball bearing rebounded.
3) Hardness Compression Load Deflection at 40% compression (CLD40%) according to DIN 53577 (sample size 100*100*50 mm³, 2 samples/foam), which involves measuring the force required to compress a sample by 40 %.

The non-isocyanate components shown in Table 2 below were mixed in a high speed mixer at about 800 rpm for 40 seconds. Then the isocyanate (TDI) component was added and the mixture was stirred for around 5 seconds and then poured into a box of dimensions of 1 m * 1 m * 1 m to form a foam. After about 24 hours, the foam height was measured and then the foam was sliced as per the requirements and its physical properties were measured. The results of these measurements are also shown in Table 2 below.

**Table 2**

| **Formulation** | **Control** | **Comparison** | **Invention** |
|---|---|---|---|
| Polyol A (pbw) | 50 | 50 | 50 |
| Polyol B (pbw) | 50 | 0 | 0 |
| Polyol C (pbw) | 0 | 50 | 50 |
| Polyol D (pbw) | 0.5 | 0.5 | 0.5 |
| Water (pphp) | 2.1 | 2.1 | 2.1 |
| Dabco T-9 (pphp) | 0.25 | 0.25 | 0.28 |
| Niax A33 (pphp) | 0.08 | 0.08 | 0.08 |
| Niax A1 (pphp) | 0.03 | 0.03 | 0.03 |
| Niax L580 (pphp) | 0 | 0 | 0.02 |
| Tegostab B8681 (pphp) | 0.45 | 0.45 | 0.45 |
| Diethanol amine (pphp) | 0.6 | 0.6 | 0.6 |
| Ortegol 204 (pphp) | 1.8 | 1.8 | 1.8 |
| TDI-80 (isocyanate index) | 110 | 110 | 110 |

| **Properties** | **Foam 1** | **Foam 2** | **Foam 3** |
|---|---|---|---|
| Full rise time (s) | 125 | 105 | 96 |
| Sink back? | No | Yes | No |
| Foam height (cm) | 88.5 | 76.0 | 88.0 |
| Density (kg/m³) | 32.0 | 33.6 | 30.6 |
| Porosity (liters/ min) | 64 | 41 | 54 |
| CLD40% (kPa) | 4.5 | 4.9 | 4.0 |
| Resilience (%) | 45 | 49 | 47 |

| | | | |
|---|---|---|---|
| 1) pbw = parts by weight 2) pphp = parts per 100 parts of polyol (by weight) 3) In the comparison and invention cases, the weight ratio of polyether polyol (a) (i) to polyether polyol (a) (ii) = weight ratio of base polyol in Polyol C to Polyol A = [(1-0.42)*50]:50 = 0.58:1. In the control case, the weight ratio of base polyol in Polyol B to Polyol A = [(1-0.43)*50]:50 = 0.57:1. 4) In the invention case, the weight ratio of foam stabiliser (b) (i) to foam stabiliser (b) (ii) = weight ratio of Niax L580 to Tegostab B8681 = 0.02:0.45 = 0.044:1. | | | |

As can be seen from Table 2 above, in the control and comparison cases, high resilience (HR) flexible polyurethane foams were produced from Polyol A, which corresponds with HR polyether polyol (a) (ii) used in the present invention and having a relatively high molecular weight, and either Polyol B (control case) or Polyol C (comparison case), both of which are polymer polyols wherein the base polyol is a conventional (non-HR) polyether polyol having a relatively low molecular weight. In the control and comparison cases, Tegostab B8681 was used as HR grade foam stabilizer (b) (ii) used in the present invention.

By replacing Polyol B (in the control case), of which the base polyol was prepared using a KOH catalyst, by Polyol C (in the control case), of which the base polyol was prepared using a DMC catalyst and which base polyol corresponds with conventional (non-HR) polyether polyol (a) (i) used in the present invention, the resulting foam in the comparison case had instability issues (sink back) whereas there was no such sink back in the control case.

Further, as can be seen from Table 2 above, surprisingly, the foam produced in the invention case wherein in addition to above-mentioned Tegostab B8681 (i.e. HR grade foam stabilizer (b) (ii)) a conventional (non-HR grade) foam stabiliser (b) (i), which in this case was Niax L580, was also used in making the HR flexible polyurethane foam from the above-mentioned HR grade polyether polyol (a) (ii) (i.e. Polyol A) and polyether polyol (a) (i) (i.e. conventional (non-HR) base polyol in Polyol C) wherein said base polyol in Polyol C was prepared using a DMC catalyst, advantageously no longer had any instability issues (no sink back). However, in the comparison case, which differed from the invention case in that in the comparison case no Niax L580 (i.e. no foam stabiliser (b) (i) used in the present invention) was used, there were such instability issues (sink back). Further, in specific, advantageously, only a relatively small amount of conventional (non-HR) foam stabiliser (b) (i) was needed in the invention case to overcome these instability issues which occurred in the comparison case.

In addition to the above-mentioned sink back, the foam height in the comparison case was quite less than the foam height in the control case. Advantageously, in the invention case, the foam height and other properties were similar to those in the control case.

## Claims

1. A process for preparing a polyurethane foam having a resilience of at least 40% as determined by ASTM D3574 - Test H, comprising
reacting a polyether polyol component (a) and a polyisocyanate in the presence of a blowing agent and a foam stabiliser component (b), wherein: polyether polyol component (a) comprises:
(a)(i) a polyether polyol which has a molecular weight lower than 4,500 g/mole and is prepared by ring-opening polymerization of an alkylene oxide in the presence of an initiator having a plurality of active hydrogen atoms and a composite metal cyanide complex catalyst, wherein, if ethylene oxide is present in the polyether polyol, the ethylene oxide is not present solely at the ends of the polyether chains, and
(a)(ii) a polyether polyol which has a molecular weight of 4,500 g/mole or higher and which has a primary hydroxyl content of at least 30%; and
foam stabiliser component (b) comprises:
(b)(i) a foam stabiliser which is an organosilicone surfactant comprising a polysiloxane-polyoxyalkylene copolymer, and
(b)(ii) another foam stabiliser which is an organosilicone surfactant comprising a polysiloxane-polyoxyalkylene copolymer,
wherein the weight ratio of foam stabiliser (b)(i) to foam stabiliser (b)(ii) is at most 0.5:1,
and wherein at least one of the following requirements (I) and (II) are met:
(I) the relative amount of the polysiloxane part in foam stabiliser (b)(i) is smaller than the relative amount of the polysiloxane part in foam stabiliser (b)(ii), and/or
(II) the molecular weight of the polysiloxane-polyoxyalkylene copolymer in foam stabiliser (b)(i) is greater than the molecular weight of the polysiloxane-polyoxyalkylene copolymer in foam stabiliser (b)(ii).

2. The process according to claim 1, wherein polyether polyol component (a) comprises a polymer polyol which is prepared by polymerizing one or more ethylenically unsaturated monomers in the presence of a base polyol which is polyether polyol (a)(i).

3. The process according to claim 1 or 2, wherein the polydispersity index for foam stabiliser (b)(i) is greater than that for foam stabiliser (b)(ii).

4. The process according to any one of claims 1-3, wherein polyether polyol (a)(i) comprises polyether chains containing 0 wt.% or at least 3 wt.% and at most 20 wt.% of ethylene oxide content and at least 75 wt.% and at most 97 wt.% or at most 100 wt.% of propylene oxide content.

5. The process according to any one of claims 1-4, wherein polyether polyol (a)(i) has a primary hydroxyl content which is at least 2% and at most 25%.

6. The process according to any one of claims 1-5, wherein polyether polyol (a)(i) has a hydroxyl value of at least 25 mg KOH/g and at most 70 mg KOH/g.

7. A polyurethane foam obtainable by the process of any one of claims 1-6.

8. A shaped article comprising the polyurethane foam of claim 7.

9. A composition, comprising:
polyether polyol (a)(i) as defined in any one of claims 1, 2 and 6; and
foam stabiliser component (b) as defined in claim 1.

10. A composition according to claim 9, comprising:
a polymer polyol as defined in claim 2.

## Patentansprüche

1. Verfahren zum Herstellen eines Polyurethanschaums, der eine Elastizität von mindestens 40 % aufweist, bestimmt durch ASTM D3574 - Test H, umfassend ein Umsetzen einer Polyetherpolyolkomponente (a) und eines Polyisocyanats in der Gegenwart eines Treibmittels und einer Schaumstabilisatorkomponente (b), wobei:
die Polyetherpolyolkomponente (a) umfasst:
(a) (i) ein Polyetherpolyol, das ein Molekulargewicht von weniger als 4.500 g/Mol aufweist und durch Ringöffnungspolymerisation eines Alkylenoxids in der Gegenwart eines Initiators, der eine Vielzahl von aktiven Wasserstoffatomen aufweist, und eines Metallcyanidkomplex-Verbundkatalysators hergestellt wird, wobei, falls Ethylenoxid in dem Polyetherpolyol vorhanden ist, das Ethylenoxid nicht ausschließlich an den Enden der Polyetherketten vorhanden ist, und (a) (ii) ein Polyetherpolyol, das ein Molekulargewicht von 4.500 g/Mol oder mehr aufweist und einen Gehalt von primärem Hydroxyl von mindestens 30 % aufweist; und die Schaumstabilisatorkomponente (b) umfasst:
(b) (i) einen Schaumstabilisator, der ein Organosilikon-Tensid ist, umfassend ein Polysiloxan-Polyoxyalkylen-Copolymer, und
(b) (ii) einen weiteren Schaumstabilisator, der ein Organosilikon-Tensid ist, umfassend ein Polysiloxan-Polyoxyalkylen-Copolymer,
wobei das Gewichtsverhältnis von Schaumstabilisator (b) (i) zu Schaumstabilisator (b) (ii) höchstens 0,5 : 1 beträgt,
und wobei mindestens eine der folgenden Anforderungen (I) und (II) erfüllt ist:
(I) die relative Menge des Polysiloxananteils in dem Schaumstabilisator (b) (i) ist geringer als die relative Menge des Polysiloxananteils in dem Schaumstabilisator (b) (ii), und/oder
(II) das Molekulargewicht des Polysiloxan-Polyoxyalkylen-Copolymers in dem Schaumstabilisator (b) (i) ist größer als das Molekulargewicht des Polysiloxan-Polyoxyalkylen-Copolymers in dem Schaumstabilisator (b) (ii).

2. Verfahren nach Anspruch 1, wobei die Polyetherpolyolkomponente (a) ein Polymerpolyol umfasst, das durch ein Polymerisieren eines oder mehrerer ethylenisch ungesättigter Monomere in der Gegenwart eines Basispolyols, das Polyetherpolyol (a) (i) ist, hergestellt wird.

3. Verfahren nach Anspruch 1 oder 2, wobei der Polydispersitätsindex für Schaumstabilisator (b) (i) größer als der für Schaumstabilisator (b) (ii) ist.

4. Verfahren nach einem der Ansprüche 1 bis 3, wobei das Polyetherpolyol (a) (i) Polyetherketten umfasst, die einen Ethylenoxidgehalt von 0 Gew.-% oder mindestens 3 Gew.-% und höchstens 20 Gew.-% und einen Propylenoxidgehalt von mindestens 75 Gew.-% und höchstens 97 Gew.-% oder höchstens 100 Gew.-% enthalten.

5. Verfahren nach einem der Ansprüche 1 bis 4, wobei das Polyetherpolyol (a) (i) einen Gehalt von primärem Hydroxyl aufweist, der mindestens 2 % und höchstens 25 % beträgt.

6. Verfahren nach einem der Ansprüche 1 bis 5, wobei das Polyetherpolyol (a) (i) eine Hydroxylzahl von mindestens 25 mg KOH/g und höchstens 70 mg KOH/g aufweist.

7. Polyurethanschaum, der durch das Verfahren nach einem der Ansprüche 1 bis 6 erhältlich ist.

8. Geformter Gegenstand, umfassend den Polyurethanschaum nach Anspruch 7.

9. Zusammensetzung, umfassend:
das Polyetherpolyol (a) (i) wie in einem der Ansprüche 1, 2 und 6 definiert; und
die Schaumstabilisatorkomponente (b) wie in Anspruch 1 definiert.

10. Eine Zusammensetzung nach Anspruch 9, umfassend:
ein Polymerpolyol wie in Anspruch 2 definiert.

## Revendications

1. Procédé de préparation d'une mousse de polyuréthane ayant une résilience d'au moins 40 % telle que déterminée par l'ASTM D3574 - Test H, comprenant la réaction d'un composant polyol de polyéther (a) et d'un polyisocyanate en présence d'un agent gonflant et d'un composant stabilisant de mousse (b), dans lequel :
le composant polyol de polyéther (a) comprend :
(a) (i) un polyol de polyéther qui a une masse moléculaire inférieure à 4 500 g/mole et est préparé par polymérisation par ouverture de cycle d'un oxyde d'alkylène en présence d'un initiateur ayant une pluralité d'atomes d'hydrogène actifs et d'un catalyseur complexe de cyanure métallique composite, dans lequel, si de l'oxyde d'éthylène est présent dans le polyol de polyéther, l'oxyde d'éthylène n'est pas uniquement aux extrémités des chaînes de polyéther, et (a) (ii) un polyol de polyéther qui a une masse moléculaire égale ou supérieure à 4 500 g/mole et qui a une teneur en hydroxyle primaire d'au moins 30 % ; et le composant stabilisant de mousse (b) comprend :
(b) (i) un stabilisant de mousse qui est un agent tensioactif organosilicone comprenant un copolymère polysiloxane-polyoxyalkylène, et
(b) (ii) un autre stabilisant de mousse qui est un agent tensioactif organosilicone comprenant un copolymère polysiloxane-polyoxyalkylène,
dans lequel le rapport pondéral entre le stabilisant de mousse (b) (i) et le stabilisant de mousse (b) (ii) est d'au plus 0,5:1,
et dans lequel au moins l'une des exigences suivantes (I) et (II) est satisfaite :
(I) la quantité relative de la partie polysiloxane dans le stabilisant de mousse (b) (i) est inférieure à la quantité relative de la partie polysiloxane dans le stabilisant de mousse (b) (ii), et/ou
(II) la masse moléculaire du copolymère polysiloxane-polyoxyalkylène dans le stabilisant de mousse (b) (i) est supérieure à la masse moléculaire du copolymère polysiloxane-polyoxyalkylène dans le stabilisant de mousse (b) (ii) .

2. Procédé selon la revendication 1, dans lequel le composant polyol de polyéther (a) comprend un polyol polymère qui est préparé par polymérisation d'un ou plusieurs monomères à insaturation éthylénique en présence d'un polyol de base qui est le polyol de polyéther (a) (i) .

3. Procédé selon la revendication 1 ou 2, dans lequel l'indice de polydispersité du stabilisant de mousse (b) (i) est supérieur à celui du stabilisant de mousse (b) (ii) .

4. Procédé selon l'une quelconque des revendications 1 à 3, dans lequel le polyol de polyéther (a) (i) comprend des chaînes de polyéther contenant 0 % en poids ou au moins 3 % en poids et au plus 20 % en poids de teneur en oxyde d'éthylène et au moins 75 % en poids et au plus 97 % en poids ou au plus 100 % en poids de teneur en oxyde de propylène.

5. Procédé selon l'une quelconque des revendications 1 à 4, dans lequel le polyol de polyéther (a) (i) a une teneur en hydroxyle primaire qui est d'au moins 2 % et d'au plus 25 %.

6. Procédé selon l'une quelconque des revendications 1 à 5, dans lequel le polyol de polyéther (a) (i) a un indice d'hydroxyle d'au moins 25 mg de KOH/g et d'au plus 70 mg de KOH/g.

7. Mousse de polyuréthane qui peut être obtenue par le procédé selon l'une quelconque des revendications 1 à 6.

8. Article façonné comprenant la mousse de polyuréthane selon la revendication 7.

9. Composition, comprenant :
du polyol de polyéther (a) (i) tel que défini dans l'une quelconque des revendications 1, 2 et 6 ; et
le composant stabilisant de mousse (b) tel que défini dans la revendication 1.

10. Composition selon la revendication 9, comprenant :
un polyol polymère tel que défini dans la revendication 2.
